# EUROPEAN PATENT APPLICATION

(11) **EP 2 626 534 A2**
(43) Date of publication of application: **14.08.2013**
(21) Application number: 13153603.9
(22) Date of filing: 01.02.2013
(51) Int. Cl.: F02C 3/30

(54) **System and method for gas turbine nox emission improvement**

(30) Priority: 07.02.2012 US 201213367649
(71) Applicant: General Electric Company, Schenectady, New York 12345 (US)
(72) Inventor: Zhang, Jianmin, Greenville, SC South Carolina 29615 (US); Baifang, Zuo, Greenville, SC South Carolina 29615 (US); Kippel, Bradly Aaron, Greenville, SC South Carolina 29615 (US)
(74) Representative: Cleary, Fidelma

(57) **Abstract**

A gas turbine system for NOx emission reduction and part load efficiency improvement is described. The system includes a gas turbine (12) having a compressor (13) which receives inlet-air (18). A direct-contact heat exchanger (30) heats and humidifies the inlet-air (18) before the inlet-air flows to the compressor (13). Heating the inlet-air (18) reduces an output of the gas turbine (12) and extends the turndown range. Humidifying the inlet-air (18) lowers NOx emissions from the gas turbine unit (12).

## Description

### FIELD OF THE INVENTION

The subject matter disclosed herein relates generally to gas turbines, and more specifically to methods and apparatus for operating gas turbines.

### BACKGROUND OF THE INVENTION

The present invention relates to the operation of a gas turbine, and more particularly to systems and methods for NOx emission improvement in a gas turbine.

Turbomachines, such as gas turbines, aero-derivatives, or the like, commonly operate in a combined-cycle and/or cogeneration mode. In combined-cycle operation, a heat recovery steam generator, which generates steam, receives the exhaust-gas from the gas turbine; the steam then flows to a steam turbine that generates additional electricity. In a co-generation operation, a portion of the steam generated by the heat recovery steam generator is sent to a separate process requiring the steam.

Gas turbines are typically required to maintain emissions compliance while generating power. A gas turbine operating at partload, may not maintain emissions compliance over the entire partload range, (from spinning reserve to near baseload). Turndown range may be considered the loading range where the gas turbine maintains emissions compliance. A broad turndown range allows operators to maintain emissions compliance, minimize fuel consumption, and avoid the thermal transients associated with shutting down the powerplant.

An inlet air heating and humidifying system may reduce the extent of the aforementioned disadvantages associated with operating a gas turbine. Conventional approaches have focused on combustion process control such as dry lean NOx (DLN) technology to reduce the NOx production in the combustion process. As such, an approach that minimizes hardware and installation would be desirable.

For the foregoing reasons, there is a need for gas turbine systems that are integrated with an inlet air direct contact heating and humidifying system that does not require use of complicated low NOx combustor in gas turbine. Methods related to the same should allow for reducing NOx emissions.

### BRIEF DESCRIPTION OF THE INVENTION

Aspects and advantages of the invention will be set forth in part in the following description, or may be obvious from the description, or may be learned through practice of the invention.

In one aspect of the present disclosure, a gas turbine system for NOx emission improvement is described. The system includes a gas turbine having a compressor which receives inlet-air. A direct-contact heat exchanger heats and humidifies the inlet-air before the inlet-air flows to the compressor. Heating the inlet-air reduces the inlet air density and turbine mass flow and therefore lowers an output of the gas turbine and extends the turndown range. In certain aspects of the present disclosure, the gas turbine system heat exchanger can humidify the inlet air and reduce NOx emissions.

In another aspect, a method of controlling a gas turbine system operation for NOx emission improvement is described. The method includes utilizing a direct-contact heat exchanger to heat and humidify the inlet-air before the inlet-air flows to a gas turbine compressor to reduce the inlet air density and turbine mass flow, and increase the inlet air moisture content and therefore lower NOx emission. Again, in certain aspects of the present disclosure, the method includes utilizing the heat exchanger to humidify the inlet air and reduce NOx emissions.

These and other features, aspects, and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWING

Embodiments of the present invention will now be described, by way of example only, with reference to the accompanying drawings in which:

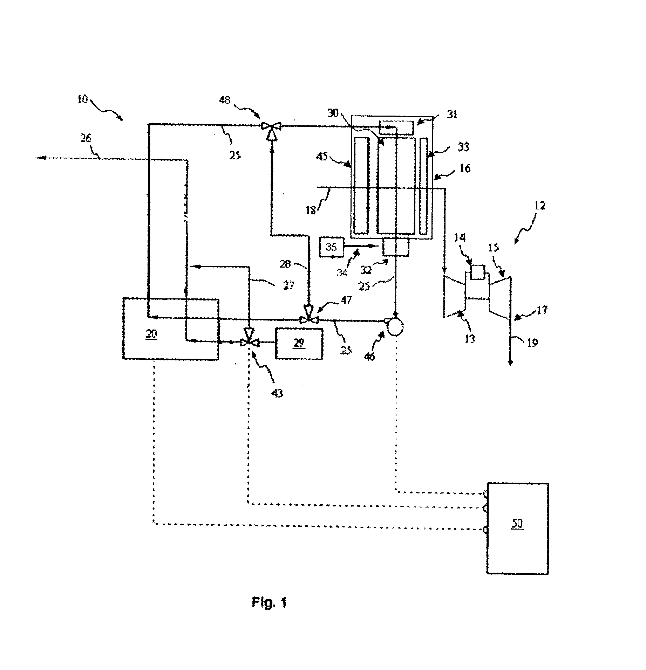

Fig. 1 provides a schematic diagram of the gas turbine in accordance with various aspects of the present disclosure.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment, can be used with another embodiment to yield a still further embodiment. Thus, it is intended that the present invention covers such modifications and variations as come within the scope of the appended claims and their equivalents.

The present disclosure is generally directed to systems and methods for NOx emission improvements in gas turbines. The systems and methods described herein have the technical effect of reduction of NOx emission by heating and humidifying the air entering the compressor of the gas turbine (hereinafter "inlet-air"). As described below, the inlet-air is heated and humidified by the heat exchanger that is already present in connection with many gas turbines.

During baseload operation, the combustion system may ensure that the exhaust-gas flowing out of the stack meets the site emissions requirements. Depending on the turndown range of the gas turbine, certain partload operations may violate the site emissions requirements, which may set the permissible operation limit of the gas turbine. This operational limit may be in excess of the power demand, and prevent a large gas turbine from providing power to the grid at a period of non-peak demand. An increase in the turndown range may allow for operating the gas turbine at lower loads, while maintaining emissions compliance and consuming less fuel.

In accordance with the present disclosure, the humidifying of the inlet-air decreases the peak flame temperature in the combustor, which leads to reduction of NOx emission. It is important to meet the emission regulation at both baseload and partload operating conditions.

Fig. 1 is a schematic diagram of a gas turbine inlet heating and humidification system 10 in accordance with various aspects of the present disclosure, the system operably connected to a gas turbine 12. The gas turbine 12 may include a compressor 13, combustor 14, and turbine 15. The gas turbine 12 may further include, for example, more than one compressor, more than one combustor, and more than one turbine (not shown). The gas turbine 12 may include a gas turbine inlet 16. The inlet 16 may be configured to receive gas turbine inlet air flow 18. For example, in one embodiment, the inlet 16 may be a gas turbine inlet filter house. The gas turbine 12 may further include a gas turbine exhaust outlet 17. The outlet 17 may be configured to discharge gas turbine exhaust flow 19. In one embodiment, the exhaust flow 19 may be directed to a heat recovery steam generator ("HRSG") (not shown). In another embodiment, the exhaust flow 19 may be dispersed into ambient air. In another embodiment, the exhaust flow 19 may be directed directly to a heat exchanger as described further herein.

The present system can be energy efficient when, for example, waste heat is used as the heat source. For example, in one embodiment, the heat source 29 may be generated by the gas turbine 12. For example, the heat source 29 may be gas turbine exhaust 19. In another embodiment, the heat source 29 may be generated by a HRSG. For example, the heat source 29 may be HRSG water or HRSG steam. In other embodiments, the heat source 29 may be any waste steam, such as steam turbine sealing steam, waste hot water, generator cooling water, or heat flow generated by any heat-producing process. It should be understood that the heat source 29 is not limited to waste heat and exhaust heat sources, but may be supplied through any heating method, such as, for example, solar heating, auxiliary boiler heating or geothermal heating.

Heat source 29 is utilized to heat heating fluid flow 25 in the heat exchanger 20. In this regard, the gas turbine inlet heating system 10 includes heat exchanger 30. In one embodiment, the heat exchanger 30 may be configured to allow the heating fluid flow 25 to pass through the heat exchanger 30. For example, the heat exchanger 30 may include a heating fluid inlet 31 and a heating fluid outlet 32. In one embodiment, the heating fluid inlet 31 may be a nozzle. In another embodiment, the heating fluid inlet 31 may be a plurality of heating inlets 31. For example, the heating fluid inlet 31 may be a plurality of nozzles. The heating fluid inlet 31 may act to communicate the heating fluid flow 25 to the heat exchanger 30.

In an exemplary aspect of an embodiment, the heating fluid outlet 32 may include a sump disposed downstream of the heat exchanger 30 in the direction of heating fluid flow 25. The sump may be configured to collect the heating fluid flow 25 after it has passed through the heat exchanger 30.

Heat exchanger 30 may be configured to receive inlet air flow 18. For example, in one embodiment, heat exchanger 30 may be situated upstream of the gas turbine inlet 16 in the direction of inlet air flow 18. In one embodiment, the heat exchanger 30 may be situated adjacent to the gas turbine inlet 16. In another embodiment, the heat exchanger 30 may be situated inside the gas turbine inlet 16. Inlet air flow 18 may be directed through heat exchanger 30 before entering gas turbine inlet 16 or compressor 13.

The heat exchanger 30 may be configured to heat the inlet air flow 18 as the inlet air flow 18 passes through the heat exchanger 30. For example, the heat exchanger 30 may be configured to allow inlet air flow 18 passing through the heat exchanger 30 to interact with the heating fluid flow 25, thereby heating the inlet air flow 18. In one embodiment, the inlet air flow 18 may be directed through the heating fluid flow 25, such that cooling is transferred from the inlet air flow 18 to the heating fluid flow 25, thereby heating the inlet air flow 18.

In another exemplary aspect of an embodiment, the heat exchanger 30 may be a direct-contact heat exchanger. For example, the heat exchanger 30 may be a media-type direct-contact heat exchanger. The media may be arranged in a structured pattern, a random pattern, or in any pattern known in the art. The media may comprise cellulose-based media, plastic-based media, metal-based media, ceramic-based media, glass fiber-based media, synthetic fiber-based media or any media or combination of media known in the art. In one embodiment, heating fluid flow 25 may be directed in a generally downward direction over the media surface. In one embodiment, the inlet air flow 18 may be directed through the heat exchanger 30 in a direction substantially perpendicular to the direction of the heating fluid flow 25.

In yet another exemplary aspect of an embodiment, the heat exchanger 30 may only receive water flow 28 of temperature close to the ambient. As the non-heated water flow 28 is in direct-contact to the inlet-air 18, the heat exchanger 30 may function as an evaporative cooler known to the art.

For instance, as heating fluid flow contacts media surfaces, heat and moisture can be released into the air flow. In certain embodiments, the elevated inlet air temperature and humidity can result in smaller NOx emissions in the gas turbine exhaust. For instance, suitable relative humidity ratios can be from about 60% to about 99%. In certain embodiments, the heating fluid may be pure water, water with mineral additives, water with glycol, water with liquid desiccant, or any other fluid or fluid combination known to those skilled in the art. In one embodiment, heating fluid flow 25 contains liquid desiccant constituents, and the liquid desiccant suppresses the water moisture releasing into the inlet-air - the proper relative humidity ratios may be controlled based on required NOx emission performance.

Generally, the temperature of the unheated inlet-air 18 may be determined by the ambient conditions or the outlet temperature of any air conditioning system (not illustrated) located upstream of the present inlet heating system 10. An embodiment of the present invention may increase the temperature of the inlet-air to any temperature allowed for by the inlet heating system. For example, the system 10 may increase the temperature of the inlet-air 18 from approximately 59 degrees Fahrenheit to approximately 120 degrees Fahrenheit. In certain embodiments, the inlet-air is heated to a range of about 10 to about 200 degrees Fahrenheit above an unheated temperature of the inlet-air. In certain embodiments, the inlet-air is heated to a range of about 50 to about 100 degrees Fahrenheit above an unheated temperature of the inlet-air.

In a further exemplary aspect of an embodiment, a filter 45 may be disposed upstream of the heat exchanger 30 in the direction of inlet air flow 18. The filter 45 may be configured to remove particulates from the inlet air flow 18 prior to the inlet air flow 18 entering the heat exchanger 30 and the gas turbine 12. In another embodiment, a filter 45 may be disposed downstream of the heat exchanger 30 in the direction of inlet air flow 18. The filter 45 may be configured to remove particulates, gases, and/or fluid droplets from the inlet air flow 18 prior to the inlet air flow 18 entering the gas turbine 12. In one embodiment, a drift eliminator 33 may be disposed downstream of the heat exchanger 30 in the direction of inlet air flow 18. The drift eliminator 33 may act to remove droplets of fluid from the gas turbine inlet air flow 18 prior to the gas turbine inlet air flow 18 entering the gas turbine 12. In one embodiment, a pump 46 may be disposed downstream of the heat exchanger 30 in the direction of heating fluid flow 25. The pump 46 may be configured to communicate heating fluid flow 25 from the heat exchanger 30 to the heating fluid heater 20.

The gas turbine inlet heating system 10 may be configured such that operation of the system 10 is regulated in relation to certain conditions. For example, a controller 50 may be operably connected to the gas turbine inlet heating and humidifying system 10 to regulate the system. In one embodiment, the controller 50 may be operably connected to the heat exchanger and configured to regulate operation of the heat exchanger 20. The controller 50 may be programmed with various control algorithms and control schemes to operate and regulate gas turbine inlet heating and humidifying system 10 and heat exchanger 20.

The present disclosure contemplates a controller that has the effect of controlling the operation of a gas turbine integrated with an inlet heating and humidification system of the present disclosure. In certain embodiments of the present disclosure, the controller can be configured to automatically and/or continuously monitor the gas turbine to determine whether the inlet heating and humidification system should operate. In other embodiments, the controller 50 may be operably connected to other components of the gas turbine inlet heating and humidification system 10 or the gas turbine 12 to maximize the efficiency of gas turbine 12.

In certain aspects of the present disclosure a method of controlling a gas turbine system operation for NOx emission improvement is described. The method includes utilizing a direct-contact heat exchanger as described herein to heat and humidify inlet-air before the inlet-air flows to a gas turbine compressor. The method further includes feeding the gas turbine compressor the heated and moisturized inlet-air, wherein the heated and humidified inlet-air reduces NOx emission of the gas turbine and extends the turndown range.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A gas turbine system for NOx emission improvement comprising:
a gas turbine (12) comprising a compressor (13), which receives inlet-air (18); and
a direct-contact heat exchanger (30), the direct-contact heat exchanger being configured to heat the inlet-air (18) before the inlet-air (18) flows to the compressor (13), wherein heating and humidifying the inlet-air reduces NOx emission of the gas turbine (12) and extends the turndown range.

2. The system of claim 1, wherein an extended turndown range comprises from about 5% to about 70% of the maximum rated load of the gas turbine.

3. The system of claim 1 or 2, wherein the inlet-air (18) is heated to a range of about 10 to about 200 degrees Fahrenheit above an unheated temperature of the inlet-air (18).

4. The system of any of claims 1 to 3, wherein the direct contact heat exchanger (30) is configured to act as an evaporative cooler.

5. The system of any of claims 1 to 4, wherein the inlet air (18) further comprises humid air.

6. The system of claim 5, wherein relative humidity ratio of the inlet-air is from about 60% to about 99%.

7. The system of any preceding claim, wherein the NOx emission is reduced by about 20% to 40% when compared to if the humidity was not elevated.

8. The system of any preceding claim, further comprising a sump, the sump configured to collect liquid from the heat exchanger (30) to recirculate the liquid back to the heat exchanger (30).

9. The system of claim 8, further comprising a drift eliminator (33), wherein, the sump is also configured to collect liquid from the drift eliminator (33) to recirculate the liquid back to the heat exchanger (30).

10. A method of controlling a gas turbine system operation for NOx emission improvement, the method comprising:
utilizing a direct-contact heat exchanger (30) to heat and humidify inlet-air (18) before the inlet-air (18) flows to a gas turbine compressor (13);
feeding the gas turbine compressor (13) the heated inlet-air (18); and
wherein the heated inlet-air (18) reduces NOx emission of the gas turbine (12) and extends the turndown range.

11. The method of claim 10, wherein an extended turndown range comprises from about 5% to about 70% of the maximum rated load of the turbomachine.

12. The method of claim 10 or 11, further comprising heating the inlet-air to a range of about 10 to about 200 degrees Fahrenheit above an unheated temperature of the inlet-air.

13. The method of any of claims 10 to 12, wherein the inlet air further comprises humid air.

14. The method of any of claims 11 to 14, wherein the NOx emission is reduced by about 20% to 40% when compared to if the humidity was not elevated.

15. The method of claim 12, further comprising utilizing a sump to collect liquid and from the heat exchanger (30) and recirculating the liquid back to the heat exchanger (30) a drift eliminator (33), wherein, the sump is also utilized to collect liquid from the drift eliminator, the liquid being recirculated back to the heat exchanger (30).

16. The method of claim 14, where the direct-contact heat exchanger (30) comprises heating fluid flow (25) that utilizes a liquid desiccant to control inlet-air humidification for NOx emission reduction.
